# EUROPEAN PATENT APPLICATION

(11) **EP 3 399 094 A1**
(43) Date of publication of application: **07.11.2018**
(21) Application number: 16881196.6
(22) Date of filing: 28.12.2016
(51) Int. Cl.: D06F 95/00

(54) **LAUNDRY SHOP SYSTEM**

(30) Priority: 28.12.2015 JP 2015257186
(71) Applicant: Qingdao Haier Washing Machine Co., Ltd., Shandong 266101 (CN); Aqua Co., Ltd, Chiyoda-ku Tokyo 100-0005 (JP)
(72) Inventor: TAKENAKA, Akira, Tokyo 100-0005 (JP); HAYASHIDA, Taichi, Tokyo 100-0005 (JP); YOSHIMURA, Shinichi, Tokyo 100-0005 (JP)
(74) Representative: Tiburzi, Andrea
(86) International application number: PCT/CN2016/112578
(87) International publication number: WO 2017/114407

(57) **Abstract**

The present disclosure relates to a laundry system, which is designed to change guidance or service content to provide treatment for different users. The laundry system includes a server (5), a plurality of devices (2...) installed in a laundry store (1) for customer treatment, such as guidance and service, and a store controller (3) capable of receiving and transmitting data between the server (5) and the devices (2...). The store controller (3) is configured to control operations of the devices (2...) of the laundry store (1), and includes a query portion (32). The query portion (32) is configured to acquire user-specific information from a mobile information terminal (6) and an information recording card (7) owned by the customer, and is configured to query the server (4). The server (5) includes a personal information management portion (52) for managing the personal information associated with the user-specific information; and a customer-customized treatment information generation portion (55) for generating, according to a query from the store controller (3), the customer-customized treatment information corresponding to the personal information extracted from a personal information management portion (53) and transmitting the same to the store controller (3). The store controller (3) further includes a customer-customized treatment processing portion (33) causing the devices (2...) to perform, for each of the customers, respective operations according to the customer-customized treatment information received from the server (5).

## Description

### TECHNICAL FIELD

The present disclosure relates to a laundry system, which is able to change guidance or service content for customer treatment.

### BACKGROUND

This type of laundry system includes a plurality of laundry devices (washing machines and dryers), which are installed in the laundry stores run in the street, and a store controller, which is provided in each of the laundry stores and is connected to the plurality of laundry devices in a communicating manner. Further, the laundry system has a management server capable of communicating with the store controller in one of the laundry stores via a communication network (such as a public line network). The store controller in the one of the laundry stores that can communicate with the server is present in a plurality of laundry stores.

In addition to an operation reception portion, the laundry device includes a display device and an audio device, and has a function of providing guidance by means of the display device and the audio device.

The store controller has a function of regularly checking an operation status of a plurality of laundry devices installed in the laundry store and transmitting the operation status or the like to a mobile information terminal of an in-use member as necessary or transmitting the operation status to the server.

In the server, personal information registered as a member is managed by a personal information management portion, and when user-specific information of one of the members is received, it is stored and used for various services.

By the way, the number of the older people living alone and the number of the foreign tourists are rapidly increasing in recent years. Thus, opportunities of using the laundry store are increasing, and the number of the laundry stores tends to increase year by year.

However, the laundry device provided therein with a display device and installed in the laundry store only can perform a display with a fixed language or a fixed size. For this reason, it is difficult for users who do not use the language to understand the content displayed, and it is difficult for elderly people to read it.

In addition, the operation of the laundry device often takes several tens of minutes to one hour, and thus, a relatively long waiting time occurs. However, no relevant consideration has been taken into account so far.

Further, sometimes, recommended courses, service information, advertisements, etc. are transmitted through broadcasts and the like in the laundry store. However, these are merely fixed contents, and thus, they can never be considered as the information meeting the requirement of the customers.

### Current Technical Literature

### Patent Literature

Patent Literature 1: Japanese Laid-Open Patent Publication No. 4297834

### SUMMARY

### The technical problem to be solved by the present disclosure

Under such circumstances, there is an urgent demand for a method capable of individually providing a service according to the registered personal information of a user and operation time of a laundry device.

It is an object of the present disclosure to provide a new laundry system that solves these problems.

### The technical solution for solving the technical problem

In order to achieve the above object, the present disclosure takes the following measures.

That is, the laundry system of the present disclosure includes a server, a plurality of devices installed in a laundry store for customer treatment, such as guidance and service, and a store controller capable of receiving and transmitting data between the server and the devices. Each store controller is configured to control operations of the devices in the laundry store, and the store controller includes a query portion for acquiring user-specific information from an information recording device owned by the customer and querying the server. The server includes a personal information management portion for managing personal information associated with the user-specific information, and a customer-customized treatment information generation portion for generating, according to a query from the store controller, customer-customized treatment information corresponding to the personal information extracted from a personal information management portion and transmitting the same to the store controller. The store controller further includes a customer-customized treatment processing portion for causing the devices to perform, for different customers, respective operations according to the customer-customized treatment information received from the server.

Regarding the present disclosure, preferably, a part of the devices in the laundry store is a laundry device which operates in multiple guidance modes. The server is configured to generate customer-customized treatment information including selection information of the guidance modes corresponding to the personal information through the customer-customized treatment information generation portion, and transmit the customer-customized treatment information to the store controller. The store controller is configured to operate the devices in accordance with the guidance modes for the each of customers based on the selection information by means of the customer-customized treatment processing portion.

Regarding the present disclosure, preferably, a part of the devices in the laundry store is a content play device that receives a distribution of content data and provides a service of audio-visual environment to the customers, and the server further includes a content data management portion which is configured to manage the content data to be provided to the customer. The server is further configured to extract the content data corresponding to the personal information from the content data management portion through the customer-customized treatment information generation portion and send customer-customized treatment information including the content data to the store controller, and the store controller is further configured to make the devices play the content data for the each of customers by means of the customer-customized treatment processing portion.

Regarding the present disclosure, preferably, another part of the device in the laundry store is a laundry device, and the store controller is further configured to acquire usage time through operations of the laundry device and transmits it to the server, and the server is further configured to extract or edit the content data based on the usage time.

Regarding the present disclosure, preferably, the information management device is a mobile information terminal that is configured to store the user-specific information and communicate with the store controller, and includes a registration request portion for requesting the server to register the personal information through a registration reception portion of the store controller and a content receiving portion for receiving a distribution of the content data for the each of customers through the customer-customized treatment processing portion of the store controller.

### The effect of the present disclosure

According to the present disclosure described above, the information suitable for the each of customers can be extracted from the server based on the user-specific information acquired from the information recording device, and the device is made to be operated. Therefore, for a laundry store providing a single service, it is possible to carry out an individual correspondence service, which is not conventionally available.

Furthermore, according to the present disclosure for switching the guidance mode of a laundry device, the laundry device gives the guidance according to the guidance language corresponding to the nationality, the guidance display size corresponding to the age and the recommended procedures in a manner of matching the customer, and this will make it more accessible to customers.

Furthermore, according to the present disclosure in which the content data is switched in accordance with a user, since it is possible to provide an audio-visual environment suitable for a customer during the waiting time, it is possible to provide a comfortable waiting time for the customer.

Further, by extracting the content data based on the usage time of the laundry device, it is possible to provide contents that are not superfluous or insufficient regarding the waiting time.

In addition, as long as the mobile information terminal is used, registration can be performed during the waiting time, and even if multiple people are in the laundry store, it is possible to deliver the contents corresponding to each of the customers.

### BRIEF DESCRIPTION OF DRAWINGS

FIG. 1 is a conceptual diagram of a laundry system according to one embodiment of the present disclosure.
FIG. 2 is a block diagram showing functions of the same system.
FIG. 3 is a diagram showing information registered and managed by the same system.
FIG. 4 is a diagram showing a table for extracting customer-customized treatment information in the same system.
FIG. 5 is a block diagram showing an operation procedure of a laundry device of the system.
FIG. 6 is a block diagram showing an operation procedure of a store controller of the system.
FIG. 7 is a block diagram showing an operation procedure of a server of the system.

### DESCRIPTION OF REFERENCE NUMBERALS

1: Laundry store; 2, Laundry device; 3, Store controller; 5: Server; 6: Mobile information terminal (information recording device); 7: Information recording card (information recording device); 24: Display device (content display device); 25: Display device (content display device); 32: Query portion; 53: Personal information management portion; 55: Customer-customized treatment information generation portion.

### DETAILED DESCRIPTION

Hereinafter, embodiments of the present disclosure will be described with reference to the drawings.

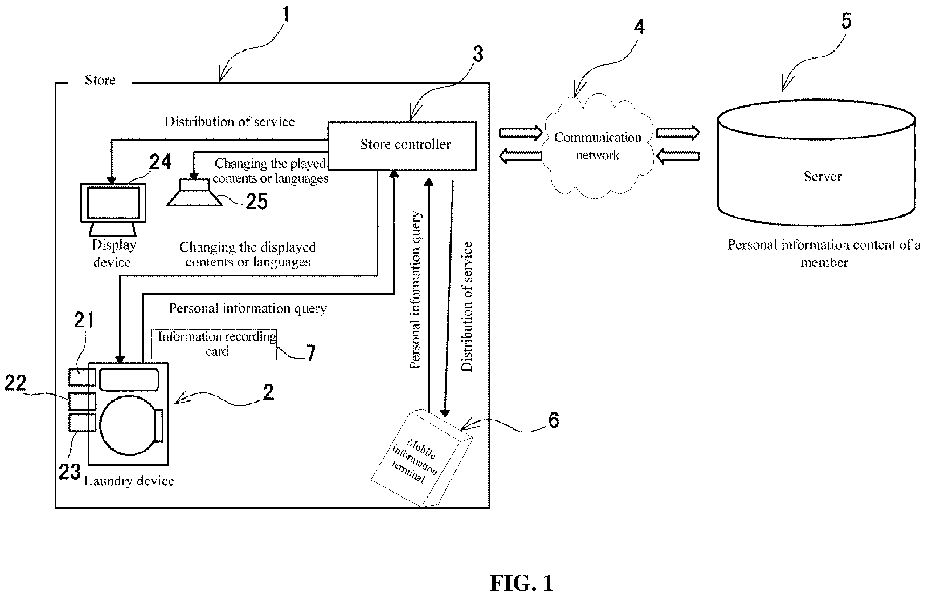

FIG. 1 is a conceptual diagram showing a system outline of a laundry system according to an embodiment of the present disclosure.

The laundry system includes a plurality of laundry devices 2... (washing machines and dryers), which are installed in the laundry stores 1 run in the street, and a store controller 3, which is provided in accordance with each of the laundry stores 1 and is connected to the plurality of laundry devices 2 inside the each of the laundry stores 1 in a communicating manner. Further, the laundry system is provided with a management server capable of communicating with the store controller 3 of one of the laundry store 1 via a communication network 4 (such as a public line network). The store controller 3 that can communicate with the server 5 may present in a plurality of ones of the laundry stores.

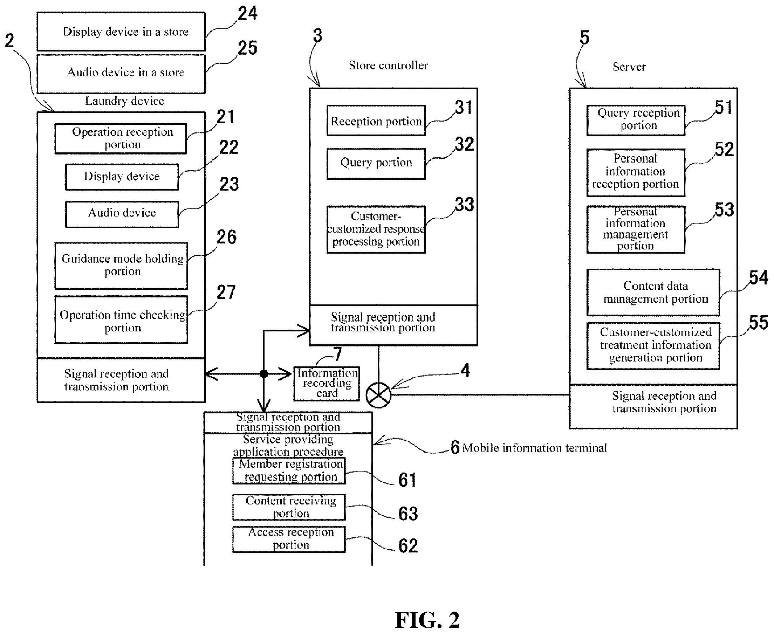

As shown in Fig. 2, in addition to an operation reception portion 21, the laundry device 2 includes a display device 22 and an audio device 23, and has a function of providing guidance by means of the display device 22 and the audio device 23.

The store controller 3 has the function of regularly checking an operation status of a plurality of laundry devices 2... installed in the laundry store 1 and transmitting the operation status or the like to the mobile information terminal (smart cellphones and mobile computer) 6 of an in-use member as necessary and transmitting a user-specific information ID to the server 5.

In the server 5, personal information registered as a member is managed by the personal information management portion 31, and when the user-specific information ID of the member is received, it is stored and used for various services.

In such a general laundry system, if the laundry devices 2 has a single guidance mode, it is impossible for a person with a different language to understand the operation method and the like, and as a strategy about how to spend waiting time, if only a television is installed inside one of the laundry stores 1, the contents are unilateral and monotonous, and then, it is very boring that the user watches the above contents for a relatively long period of time.

Therefore, in the present embodiment, the laundry device 2 is provided with multiple guidance modes, and the display device 24 and the audio device 25 independent from the laundry device 2 are installed in the laundry store 1. In the store controller 3, image data and audio data are prepared in the store controller 3 in plural modes so that the in-store broadcasts can be performed in several languages. On the other hand, it is set that customer-customized treatment information for users can be generated by the server 5. In addition, when a user tries to use the laundry devices 2... by using the mobile information terminal 6 or the information recording card (magnetic cards such as an IC card or a prepaid card) 7 as the information recording devices, the personal information query is sent to the server 5 via the store controller 3 in accordance with the user-specific information ID. Based on the personal information registered in advance, the server 5 changes the guidance of the devices 22 to 25 etc. in the laundry store 1 into the voice and the display size that are suitable for the customer, makes contents played by the display device 24 or the audio device 25 in the laundry store 1 suitable for the customer or changes the distributed services such as films, music and the like into contents suitable for the customer.

FIG. 2 is a functional block diagram showing a configuration for that purpose. The laundry device 2 is a washing machine and a dryer installed in the laundry store 1. In addition to the operation reception portion 21, it includes the above-described display device 22 and the audio device 23, and has the function of providing menus and guiding the operation procedures. Besides, a guidance mode holding portion 24 is provided with a guidance mode for several languages, a guidance mode for large, medium and small display size and a guidance mode for fast, medium and slow speeds. In addition, the laundry devices 2... have an operation time checking portion 27. The operation time checking portion 27 has a function of acquiring the usage time of the washing machine and the dryer through operation of the user with respect to the laundry devices 2... and transmitting the usage time and the user-specific information ID to the store controller 3 together.

In addition to the reception portion 31 for accepting use of the user together with the user-specific information ID, the store controller 3 includes an query portion 32 for querying the server 3 of personal information to be described later on the basis of the user-specific information ID, and a customer-specific processing portion 33 for switching the mode of a corresponding device among the laundry devices 2 or distributing the contents information when receiving the customer-customized treatment information.

The customer-specific processing portion 33 outputs the guidance mode information to the corresponding laundry device 2... according to the selection information of the guidance mode, or switches the language for in-store broadcasts and outputs image data and audio data to the display device 24 and the audio device 25 as the content play devices inside the laundry store 1.

In addition to the query reception portion 51, the server 5 includes a personal information reception portion 52, a personal information management portion 53, a content data management portion 54 and a customer-customized treatment information generation portion 55.

The query reception portion 51 receives the query request with the user-specific information ID from the query portion 32 of the store controller 3 and extracts the personal information associated with the user-specific information ID from the personal information managing portion 53.

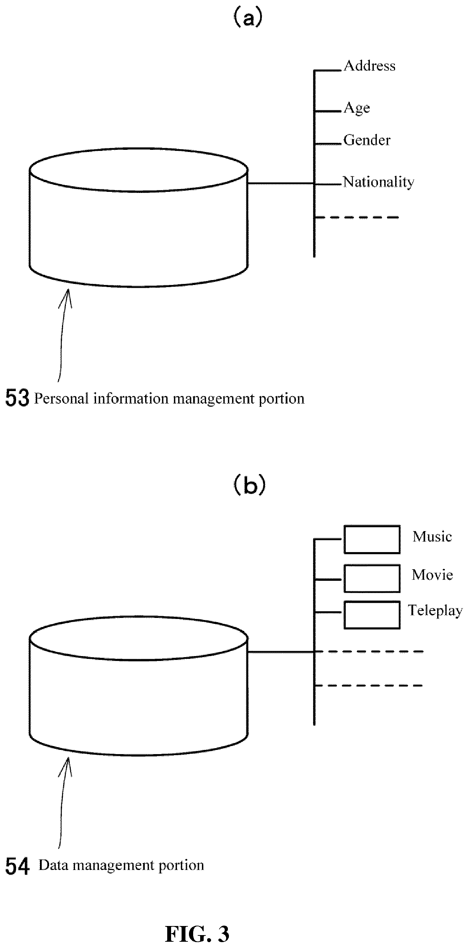

The personal information management portion 53 registers and manages the personal information with which the personal information reception portion 52 previously accepted the registration request. The personal information includes the address, the age, the gender, the nationality, the family members, the hobbies, and the like shown in FIG. 3(a). Registration is accepted through the Internet, from the mobile information terminal 6, or through a paper medium, and the distributed user-specific information ID is recorded in the information recording devices such as the information recording card 7 or the mobile information terminal 6. Upon registration, as shown in FIG. 3(b), registration of the content information such as music, movies, teleplays, etc. is accepted as the content expected to be distributed.

The personal information managing portion 53 registers and manages the above-mentioned personal information as a record associated with the user-specific information ID.

As shown in FIG. 3(b), the content data management portion 54 manages content data such as music, movies, teleplays, advertisements, etc. in association with the attribute information such as the language, the age, the gender and the like and the play time.

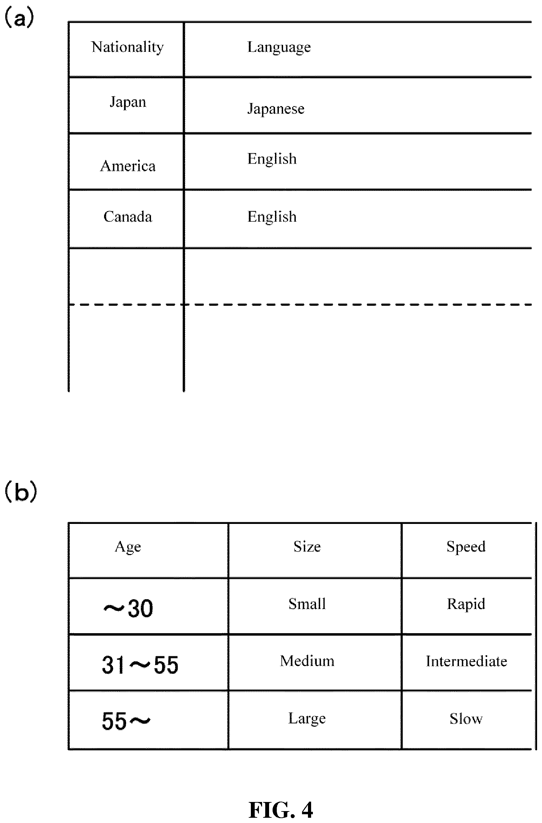

As shown in FIGS. 4(a) and 4(b), the customer-customized treatment information generation portion 55 has a table associating the nationality, the language, the age with the display size or the guidance speed, etc., and the following algorithm is so set as to generate selection information of the guidance mode corresponding to the personal information extracted. For example, when the nationality is Japanese and the age is 30 to 50, the selection information is generated such that the language is Japanese, the display size is medium, and the displaying speed and speaking speed are medium. In addition, when the nationality is US and the age is 55, the selection information is generated such that the language is English, the display size is large, and the displaying speed or the speaking speed is slow. In addition, the following algorithm is so set as to extract or edit the contents corresponding to the attribute of the user and the driving time among the preregistered content information from the content data management portion 54 and generate and distribute the data when the user extracted intended to distribute the contents shown in FIG. 3(b). For example, when the user desires to listen to music and the operation time is one hour, music data is extracted and edited from the music associated with the age and the gender.

In the mobile information terminal 6, by downloading the service providing application procedure in advance, the functions of a member registration requesting portion 61, an access reception portion 62 and a content receiving portion 63 are incorporated.

The member registration requesting portion 61 can display the procedure from the start to the end of the member registration on the screen and registers the above-mentioned personal information, content information and the like in the waiting period or the like by means of transmitting information to and receiving information from the server 5 directly or through the store controller 3.

When a user having this mobile information terminal 6 enters the laundry store 1, the store controller 3 queries the user-specific information ID to the server 5, acquires the customer-customized treatment information from the server 5 and reflects the guidance corresponding to the language, the age, etc. onto the display device 24 and the audio device 25. In addition to that, the access reception portion 62 is also configured to provide recommendation information, service information and the like.

By using the mobile information terminal 6, even if pluralities of people are present at the laundry store 1, it is possible to receive the distribution of contents for each of the customers.

In preparation for the end of the operation of the laundry device in the middle of a movie or a teleplays, the server 5 makes it possible to record a log information into the record of the user-specific information ID of the personal information management portion 53, and when the customer logs in the next time, it has a function to perform continuous data distribution by using the log information.

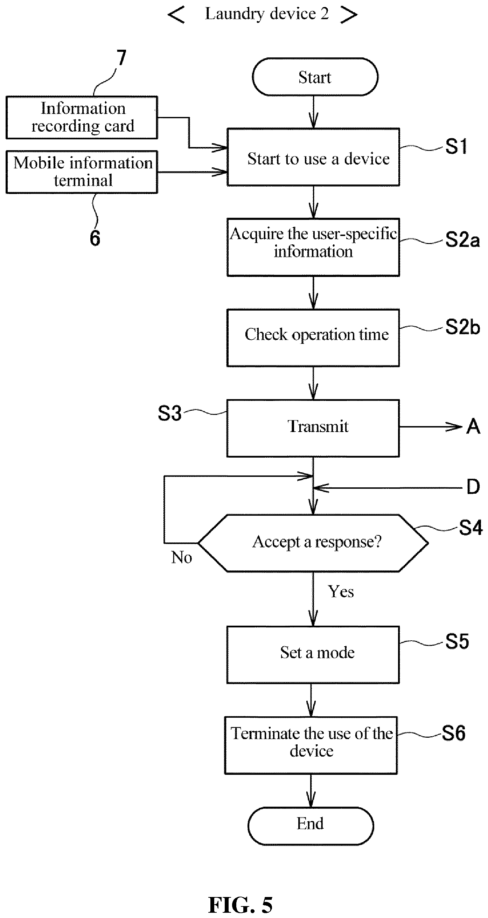

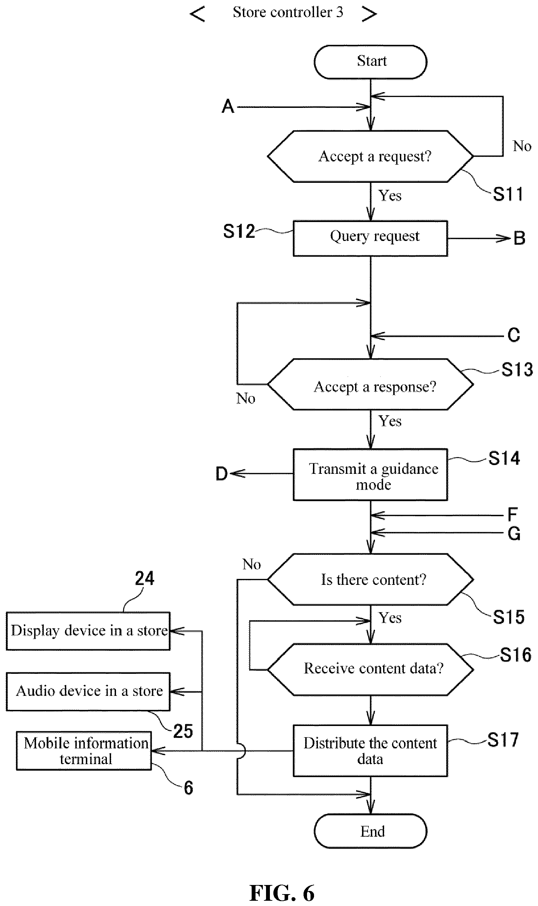

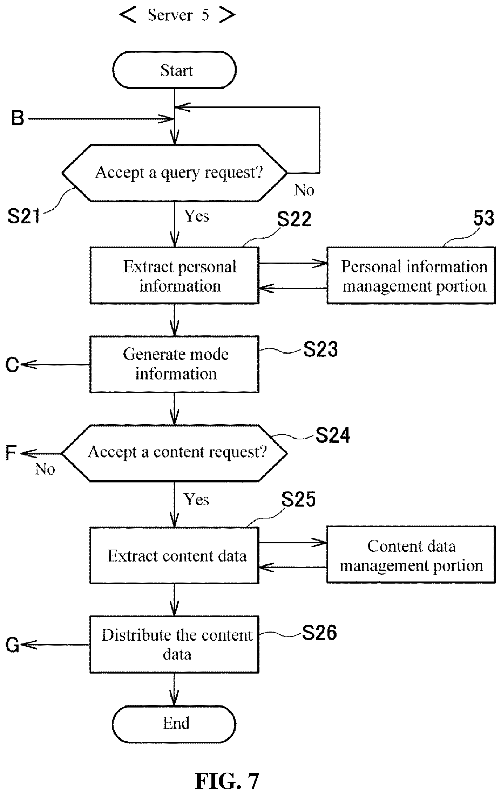

FIG. 5 is a flowchart showing a procedure executed by the laundry device 2 in this system, FIG. 6 is a flowchart showing a procedure executed by the store controller 3, and FIG. 7 is a flowchart showing a procedure executed by the server 5.

In the laundry device 2, after the use of the device is started in step S1, the user-specific information ID is acquired in step S2a, the operation time is checked in step S2b, they are transmitted to the store controller 4 in step S3, and the process of waiting for a response is started in step S4.

When the store controller 3 is in a state of waiting for reception in step S11 and is called from the laundry device 2, the store controller 3 uses the user-specific information ID and the operation time received to make a query request to the server 5 in step S12.

When the server 5 is in a state of waiting for query in step S21 and when there is a query request, the query reception portion 52 accepts this query request and extracts personal information from the personal information management portion 53 in step S22, and in step S23, the customer-customized treatment information generation portion 55 generates the selection information of the guidance mode and returns it to the store controller 3. Upon receipt of this selection information in step S13, the store controller 3 transmits the selection information of the guidance mode received to the corresponding laundry device 2...in step S14.

Upon receipt of the response in step S4, the laundry device 2 switches the internal setting to the corresponding guidance mode in the guidance mode holding portion 26 in step S5.

As a result, the guidance is given based on the language, the display size, etc., suitable for the user who uses the laundry device 2, thereby avoiding inconveniences such as incomprehensibility because of different languages and disadvantages such as it is hard to see content displayed clearly due to aging.

On the other hand, after step S23, the server 5 determines whether there is content registration information in the personal information in step S24. If it is YES, the server 5 determines that the customer-customized treatment information generation portion 55 extracts the corresponding content data from the content data management portion 54 based on a predetermined algorithm in the next step S25 and distributes it to the store controller 3 in step S26.

After step S14, the store controller 3 stands by for content distribution, and upon receiving from the server 5 the fact that there is no content request in step S24, the store controller 3 terminates the process. However, when receiving the content data distributed in S26 from the server 5, the content data is distributed to the display device 24, the audio device 25 and the mobile information terminal 6 as the content play devices in step S17. Then, the content is played, and the process is ended.

For this reason, the users at the laundry store can enjoy movies, music, teleplays, etc. that matches their preference during a waiting period.

As described above, unlike uniform service environment in conventional laundry stores, this laundry system can construct a guidance environment that provides the usage convenience for each of the users and an audio-visual environment that matches hobbies of users in the waiting period.

With such an improved convenience for customers, it is possible to differentiate it from other shops and increase the number of customers.

In addition, since the recommendation information and advertisements tailored to the user can be delivered, the laundry system can be utilized for more efficient store management.

Although the embodiment of the present disclosure has been described above, the specific configuration of each part is not limited to the above-described embodiment, and various modifications are possible without departing from the gist of the present disclosure.

## Claims

1. A laundry system, comprising:
a server;
a plurality of devices installed in a laundry store for customer treatment, such as guidance and service; and
a store controller capable of receiving and transmitting data between the server and the devices; wherein
the store controller is configured to control operations of the devices in the laundry store; and
the store controller comprises a query portion for acquiring user-specific information from an information recording device owned by the customer and querying the server;
the server comprises: a personal information management portion for managing personal information associated with the user-specific information, and a customer-customized treatment information generation portion for generating, according to a query from the store controller, customer-customized treatment information corresponding to the personal information extracted from the personal information management portion and transmitting the customer-customized treatment information to the store controller; and
the store controller further comprises a customer-customized treatment processing portion for causing the devices to perform, for different customers, respective operations according to the customer-customized treatment information received from the server.

2. The laundry system according to claim 1, wherein
a part of the devices installed in the laundry store is a laundry device which operates in multiple guidance modes, and
the server is configured to generate the customer-customized treatment information including selection information of the guidance modes corresponding to the personal information through the customer-customized treatment information generation portion, and transmit the customer-customized treatment information to the store controller, and the store controller is configured to operate the devices in accordance with the guidance modes for the each of customers based on the selection information by means of the customer-customized treatment processing portion.

3. The laundry system according to claim 1, wherein
a part of the devices installed in the laundry store is a content play device that receives a distribution of content data and provides a service of audio-visual environment to the customers;
the server further comprises a content data management portion which is configured to manage the content data to be provided to the customer; and
the server is further configured to extract the content data corresponding to the personal information from the content data management portion through the customer-customized treatment information generation portion and send customer-customized treatment information including the content data to the store controller, and the store controller is further configured to make the devices play the content data for the each of customers by means of the customer-customized treatment processing portion.

4. The laundry system according to claim 3, wherein
the other part of the devices installed in the laundry store is the laundry device; and
the store controller is further configured to acquire usage time through operations of the laundry device and transmits it to the server, and the server is further configured to extract or edit the content data based on the usage time.

5. The laundry system according to claim 3 or claim 4, wherein
the information management device is a mobile information terminal that is configured to store the user-specific information and communicate with the store controller, and comprises a registration request portion for requesting the server to register the personal information through a registration reception portion of the store controller and a content receiving portion for receiving a distribution of the content data for the each of customers through the customer-customized treatment processing portion of the store controller.
